# EUROPEAN PATENT SPECIFICATION

(11) **EP 2 746 881 B1**
(45) Date of publication and mention of the grant of the patent: **27.10.2021**
(21) Application number: 13197298.6
(22) Date of filing: 13.12.2013
(51) Int. Cl.: G05B 19/18, B23B 3/06, B23P 23/02, B23Q 39/02

(54) **MACHINE CONTROL SYSTEM EMPLOYING LATHE TOOL AND CUTTER**
MASCHINENSTEUERUNGSSYSTEM MIT DREHWERKZEUG UND SCHNEIDVORRICHTUNG
SYSTÈME DE COMMANDE DE MACHINE EMPLOYANT UN OUTIL DE TOURNAGE ET UN DISPOSITIF DE COUPE

(30) Priority: 19.12.2012 CN 201210554031; 19.12.2012 CN 201210554041
(43) Date of publication of application: 25.06.2014
(73) Proprietor: Fuxiang Precision Industrial (Kunshan) Co., Ltd., Jiangsu Province (CN)
(72) Inventor: Yang, Ming-Lu, New Taipei (TW); Zhang, Tian-En, JIASHAN (CN); Zhang, Wai-Chuan, JIASHAN (CN); Jia, Jian-Shi, JIASHAN (CN); Peng, Yang-Mao, JIASHAN (CN); Qu, Jian, JIASHAN (CN); Chen, Feng-Hua, JIASHAN (CN); Xu, Zhen-Guang, JIASHAN (CN); Sui, Jing-Shuang, JIASHAN (CN); Zhuang, Da-Qing, JIASHAN (CN); Li, Jie, JIASHAN (CN); Liu, Yi, JIASHAN (CN); Yu, Jian-Min, JIASHAN (CN)
(74) Representative: CMS Cameron McKenna Nabarro Olswang LLP

(56) References cited:
- EP-A1- 1 925 397
- EP-A1- 1 952 937
- DE-A1-102009 058 649
- DE-A1-102011 105 402

## Description

### BackGround

### Field

The present disclosure generally relates to cutting machine control system, and particularly, to a machine control system employing lathe tool and cutter. Such machine control system is known from EP1952937 A1 and CN201524905U.

### BackGround

CNC (computer numerical control) machine is an important device in manufacturing fields and usually is employed to machine workpiece. The CNC machine may be adapted for one machine method to machine a workpiece. However, due to the limitation of the machine method and the surface finish requirement of the workpiece, it may be difficult to satisfy all the machine requirement of the workpiece using only one machine method. The workpiece may undergo a number of machine methods to obtain a surface finish as required.

For example, an electronic device such as a desktop computer or a mobile phone may have a machined housing made of metal. The metallic housing includes a top portion and a peripheral sidewall extending from a peripheral edge of the top portion. The top portion has a greater surface area than that of the peripheral sidewall and has a non-circular flat surface or non-circular curved surface. The peripheral sidewall has four side surfaces arranged in order and adjacent two side surfaces are connected by corners. In related manufacturing fields, if a milling machine is employed to machine the metallic housing, some tracks remain on the top portion that has been milled because of intermittent contact and interrupted milling by the cutter. Then a milling process needs to be applied for a better appearance. Therefore, using the milling process may not be efficient. If a lathe machine is employed to machine the metallic member, it is difficult to machine a surface which is not circular. The lathe is not suitable to machine the peripheral sidewalls because of the four corners of the peripheral sidewall. Thus a number of additional machining processes must be added to machine the metallic housing. Machining the electronic devices using a lathe is time-consuming.

Therefore, there is room for improvement within the art.

### Summary

According to one aspect of the disclosure, a machine control system employing a lathe tool and a cutter includes an input module, a worktable, a first sliding module, a second sliding module, a lathe feeding module, a lathe tool connected to the lathe feeding module, a cutting feeding module, a cutter connected to the cutting feeding module, and a control module. The control module is electrically connected to the input module, the worktable, the first sliding module, the second sliding module, the lathe feeding module, and the cutting feeding module. The first sliding module is controlled by the input module inputting control parameters. The first sliding module drives the second sliding module to slide along a first direction, the control module controls the second sliding module. The second sliding module drives the lathe feeding module and the cutting feeding module to slide along a second direction perpendicular to the first direction. The lathe feeding module controls the lathe tool to slide along a third direction perpendicular to the first direction and the second direction reciprocally, and the cutting feeding module controls the cutter to slide along the third direction and rotate along a first axis parallel to the third direction, and the cutting feeding module is a milling or a scraping feeding module. The cutter is a milling cutter corresponding to the milling feeding module when the cutting feeding module is the milling feeding module, or the cutter is a scraping cutter corresponding to the scraping feeding module when the cutting feeding module is the scraping feeding module.

A machine control system employing lathe tool and cutter, includes an input module, a worktable, a first sliding module, a second sliding module, a lathe feeding module, a lathe tool assembled to the lathe feeding module, a cutting feeding module, a cutter assembled to the cutting feeding module, and a control module electrically connected to the input module, the worktable, the first sliding module, the second sliding module, the lathe feeding module, and the cutting feeding module. Wherein the control module controls the first sliding module, the first sliding module drives the second sliding module to slide along a first direction, the first sliding module controls the second sliding module to drive the lathe feeding module and the cutting feeding module to slide along a second direction perpendicular to the first direction, the lathe feeding module controls the lathe tool to slide along a third direction perpendicular to the first direction and the second direction reciprocally, and the cutting feeding module controls the cutter to slide along the third direction and rotate along a first axis parallel to the third direction, the control module controls the worktable to rotate along a second axis parallel to the third direction, the cutting feeding module is a milling feeding module or a scraping feeding module, the cutter is a milling cutter corresponding to the milling feeding module when the cutting feeding module is the milling feeding module, or the cutter is a scraping cutter corresponding to the scraping feeding module when the cutting feeding module is the scraping feeding module.

### BRIEF DESCRIPTION OF THE DRAWING

The components in the drawings are not necessarily drawn to scale, the emphasis instead placed upon clearly illustrating the principles of the present disclosure. Moreover, in the drawings, like reference numerals designate corresponding parts throughout the several views.
FIG. 1 is an isometric view of an embodiment of a machine.
FIG. 2 is a machine control system adapted by the machine of FIG. 1.
FIG. 3 is an isometric view of a metallic member to be machined.
FIG. 4 is a sectional view of the metallic member of FIG. 3, taken along line IV-IV of FIG. 3.
FIG. 5 is a movement track of a lathe tool employed by the machine control system.

### DETAILED DESCRIPTION

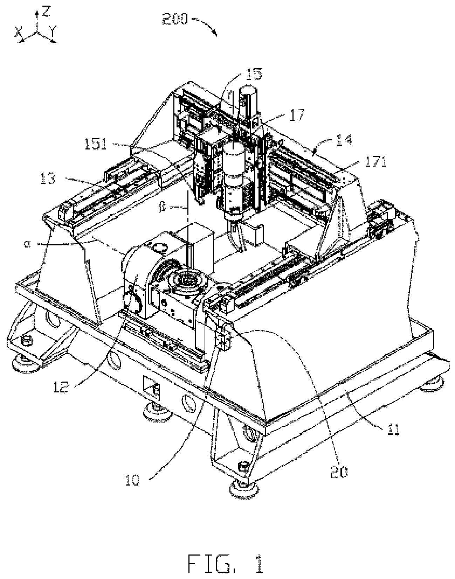

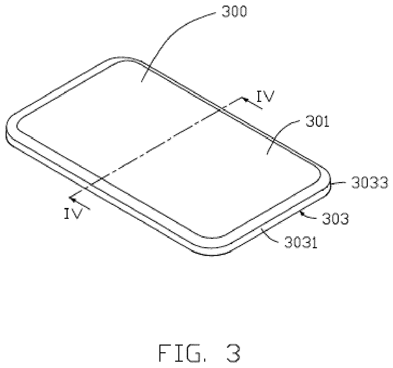

FIG. 1 shows an embodiment of a machine 200 for machining a metallic member 300 (see FIG. 3). The machine 200 includes an input module 10, a machine support 11, a worktable 12, a first sliding module 13, a second sliding module 14, a lathe feeding module 15, a cutting feeding module 17, and a control module 20 electrically connected to the input module 10. The input module 10 is mounted on a side of the machine support 11. The control module 20 is mounted on a side of the input module 10 and is electrically connected to the input module 10. The worktable 12 is rotatably mounted on the machine support 11. The first sliding module 13 is slidably mounted on the machine support 11 and is positioned above the worktable 12. The second sliding module 14 is sidably mounted on the first sliding module 13. The lathe feeding module 15 and the cutting feeding module 17 are arranged side by side and slidably mounted on the second sliding module 14. The metallic member 300 is held on the worktable 12. A lathe tool 151 is assembled to the lathe feeding module 15, a cutter 171 is assembled to the cutting feeding module 17. The first sliding module 13, the second sliding module 14, the lathe feeding module 15, and the cutting feeding module 17 are electrically connected to the control module 20. Under the control of the control module 20, the first sliding module 13 drives the second sliding module 14 to move along the X axis (a first direction). The second sliding module 14 moves the lathe feeding module 15 and the cutting feeding module 17 along the Y axis (a second direction). The lathe feeding module 15 drives the lathe tool 151 to slide along the Z axis (a third direction) reciprocating at a high speed. The cutting feeding module 17 drives the cutter 171 to slide along the Z axis and rotates the cutter 171 along ayaxis (parallel to the third direction). The worktable 12 rotates the metallic member 300 along aaaxis (parallel to the second direction) and aβaxis (parallel to the third direction). In the illustrated embodiment, the cutting feeding module 17 is a milling feeding module, and the cutter 171 is a milling cutter.

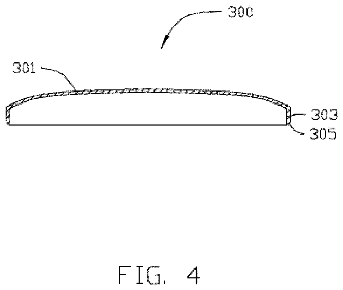

FIGS. 3 and 4 shows that the metallic member 300 to be machined is a housing of a mobile phone. The metallic member 300 is substantially rectangular and hollow, and includes a top portion 301 and a peripheral sidewall 303 extending from a peripheral edge of the top portion 301. The top portion 301 has a curved surface with a relatively greater surface area than that of the peripheral sidewall 303, the curved surface is a non-rotatable three-dimensional curved surface. The peripheral sidewall 303 has four side surfaces 3031 arranged in order and every two of the adjacent side surfaces 3031 are connected by a corner 3033. The four side surfaces 3031 are substantially flat surfaces, each corner 3033 interconnects two adjacent side surfaces 3031. The peripheral sidewall 303 further includes an end edge 305 away from the top portion 301. The top portion 301, the peripheral sidewall 303 and the end edge 305 of the metallic member 300 are to be machined by the machine 200 in that order.

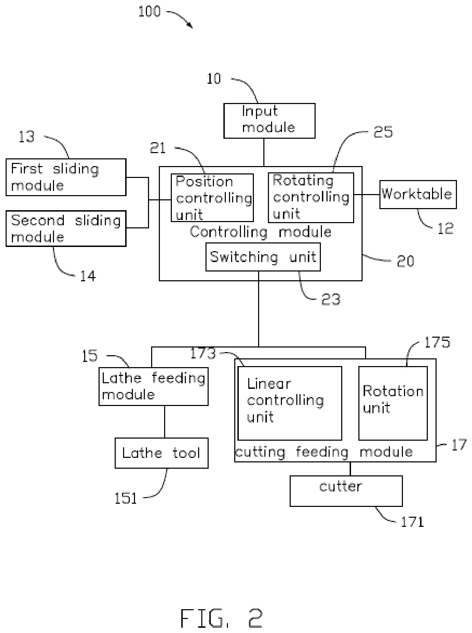

FIG. 2 shows a machine control system 100 adapted by the machine 200 for machining the metallic member 300. The machine control system 100 is a modularization of the machine 200, and includes the input module 10, the control module 20, the worktable 12, the first sliding module 13, the second sliding module 14, the lathe feeding module 15, and the cutting feeding module 17.

The input module 10 is electrically connected to the control module 20 for entering a number of control parameters and transferring the control parameters to the control module 20. The control parameters include moving range, moving speed of the lathe feeding module 15 and the cutting feeding module 17 along the X axis and the Y axis, frequency and moving range of the lathe tool 151 along the Z axis, as well as the rotating speed of the cutter 171 along the γ axis, and the rotating speed of the worktable 12.

The control module 20 is assembled to the input module 10 and electrically connected to the input module 10. The control module 20 is further electrically connected to the worktable 12, the first sliding module 13, the second sliding module 14, the lathe feeding module 15, the lathe tool 151, the cutting feeding module 17, and the cutter 171 for controlling the machine 200. The control module 20 includes a position control unit 21, a switching unit 23, and a rotation control unit 25. The position control unit 21 is electrically connected to the first sliding module 13 and the second sliding module 40, to control the first sliding module 13 and the second sliding module 40 to move the lathe feeding module 15, and the cutting feeding module 17 along the X/Y axis. The switching unit 23 is electrically connected to the lathe feeding module 15 and the cutting feeding module 17, for switching executing between the lathe feeding module 15 and the cutting feeding module 17. The rotation control unit 25 is electrically connected to the worktable 12 to control the rotation of the worktable 12. In the embodiment, the rotation speed of the worktable 12 along the β axis is 100-900 round/minute. The lathe tool 151 is assembled to a tool holder (not labeled) of the lathe feeding module 15, the cutter 171 is rotatably assembled to the cutting feeding module 17.

The lathe feeding module 15 drives the lathe tool 151 to move along the Z axis reciprocally at a high frequency about 500-3200 Hz. The cutting feeding module 17 further includes a linear control unit 173 and a rotation unit 175. The linear control unit 173 drives the cutter 171 to move along the Z axis. The rotation unit 175 rotates the cutter 171 along the γ axis.

In the embodiment, when manually inputting control parameters into the input module 10. First, the machine movement of the machine 200 is simulated to machine the top portion 301, the peripheral sidewall 203, and the end edge 305, thereby obtaining a number of control parameters. Then, the control parameters of machining the top portion 301, the peripheral sidewall 203, and the end edge 30 are typed into the input module 10, that is, typing the control parameters of different machine process, such as moving ranges, moving speeds of the lathe feeding module 15 and the cutting feeding module 17 along the X axis and the Y axis, frequency and moving range of the lathe tool 151 along the Z axis, rotating speed of the cutter 171 along the γ axis, and the rotating speed of the worktable 12. The surface finish of the top portion 301 is 0.2-1 micrometer.

During the process of machining the top portion 301 using the machine 200, the peripheral sidewall 303, and the end edge 305 can illustrate the control procedure of the machine control system 100.

First, the control parameters are input into the input module 10 to control the machine process for machining the top portion 301 of the metallic member 300. In detail, typing the moving ranges of the lathe feeding module 15 along the X axis and the Y axis, the moving speed V1, the machining time t1 of the lathe tool 151 into the input module 10. The original machine point of the metallic member 300 is located at a middle of an edge of the metallic member 300 which is arranged parallel to the X axis. The terminal machine point of the metallic member 300 is located at a center of the metallic member 300, such that, when starting machining, the lathe tool 151 just moves along the Y axis toward the center of the metallic member 300. Typing the frequency f, the moving range H of the lathe tool 151 along the Z axis, and the rotating speed of the worktable 12 r1 into the input module 10. The moving range H of the lathe tool 151 along the Z axis is decreased along the Y axis toward the center of the metallic member 300 automatically, according to a preset mode. In the embodiment, the rotating speed r1 of the worktable 12 along the α axis is up to 600 round/minute. The frequency f of lathe tool 151 along the Z axis is 2500 Hz.

Input control parameters into the input module 10 to control the machine process for machining the peripheral sidewall 303 of the metallic member 300. In detail, typing the moving ranges of the cutting feeding module 17 along the X axis and the Y axis, the moving speed V2, the machining time t2 of the cutter 171 machining the peripheral sidewall 303, the rotating speed r2 of the cutter 171 into the input module 10, and selecting the predetermined machining path of the cutter 171 in the input module 10. Then, the cutter 171 machines the peripheral sidewall 303 one by one automatically.

Input control parameters into the input module 10 to control the machine process for machining the end edge 305 of the metallic member 300. In detail, typing the rotating angles of the worktable 12 along the α and β axis, the moving ranges of the cutting feeding module 17 along the X axis and the Y axis, the moving speeds V3 of the cutter 171 along the X axis and the Y axis, the machining time t3 of the cutter 171 machining the peripheral sidewall 303, the rotating speed r3 of the cutter 171 into the input module 10, and selecting the predetermined machining path of the cutter 171 in the input module 10. Then, the cutter 171 machines the end edge 305 along a periphery of the metallic member 300.

The switching unit 23 transmits control signals to the position control unit 21 and the lathe feeding module 15. The position control unit 21 controls the first sliding module 13 to drive the lathe feeding module 15 along the Y axis. In addition, controls the second sliding module 14 to drive the lathe feeding module 15 to move along the X axis, thereby positioning the lathe tool 151 above a middle of an edge of the top portion 301 parallel to the X axis. Then, the position control unit 21 controls the second sliding module 14 to drive the lathe feeding module 15 to move along the Y axis at a moving speed v1 automatically. Simultaneously, the rotating control unit 25 controls the worktable 12 to rotate the metallic member 300 along theaaxis at a rotation speed r1 round/minute, and the control module 20 controls the lathe feeding module 15 to drive the lathe tool 151 to move along the Z axis reciprocally at a frequency f and a moving range H. The moving range H is changed due to the Y position of the lathe tool 151 automatically.

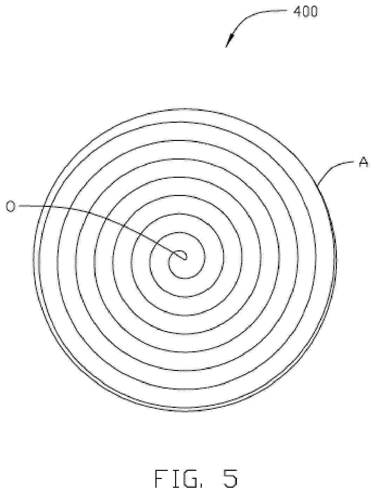

Also referring to FIG. 5, in the machining procedure of the lathe tool 151 machining the top portion 301, the movement track 400 of the lathe tool 151 projected on the top portion 301 is spiral. The lathe tool 151 is moved from a point A on the edge of the top portion 301 toward the central point O of the top portion 301 along the spiral movement track 400, thereby finishing the machining of the top portion 301. In the embodiment, the surface finish of the top portion 301 is about 0.25-0.3 micrometer.

When the lathe tool 151 machines the top portion 301 for tl minutes, the switching unit 23 transfers signal to the position control unit 21 and the cutting feeding module 17. The position control unit 21 controls the lathe feeding module 15 to move away from the metallic member 300, and controls the first sliding module 13 and the second sliding module 14 to drive the cutting feeding module 17 toward the metallic member 300 along the X axis and the Y axis, till the cutting feeding module 17 arrives at the peripheral sidewall 303 of the metallic member 300. The cutting feeding module 17 drives the cutter 171 to mill the peripheral sidewall 303.

In the milling process, the cutter 171 mills the peripheral sidewall 303. First, the linear control unit 173 controls the cutter 171 to move along the Z axis till the cutter 171 arrives at a predetermined position of the peripheral sidewall 303. Then, the rotation unit 175 rotates the cutter 171 along the γ axis at a rotation speed r2 to mill the peripheral sidewall 303, simultaneously, the first sliding module 13 and the second sliding module 14 drives the cutter 171 to move relative to the metallic member 300 along the X axis and the Y axis at a speed v2 according a predetermined path, and the cutting feeding module 17 controls a feed of the cutter 171 relative to the metallic member 300, thereby finishing the milling of the peripheral sidewall 303. In the embodiment, the worktable 90 remains still. The rotating control unit 25 may transmit signal the worktable 12 to rotate along the α axis to match the cutter 171 milling the peripheral sidewall 303. In the embodiment, the surface finish of the peripheral sidewall 303.

When the cutter 171 mills the peripheral sidewall 303 for t2 minutes, the position control unit 21 transmits a signal to the first sliding module 13 and the second sliding module 14. So, the first sliding module 13 and the second sliding module 14 drive the cutting feeding module 17 away from the metallic member 300. In addition, the cutting feeding module 17 holds to stop rotating and milling. The rotating control unit 25 controls the worktable 12 to rotate along the α axis to turn the end edge 305 toward the cutter 171. Then, the first sliding module 13 and the second sliding module 14 drive the cutting feeding module 17 toward the end edge 305 till the cutter 171 resists a preset portion on the end edge 305. The first sliding module 13 and the second sliding module 14 drive the cutter 171 to move along a predetermined path at speed V3, simultaneously, the rotation unit 175 rotates the cutter 171 at a rotation speed r3 round/minute and the cutting feeding module 17 controls a chamfering feed of the cutter 171 relative to the metallic member 300. When the chamfering of a side of the end edge 305 is finished, the rotation control unit 25 transmits a control signal to the worktable 12 and rotates the worktable 12 along the α axis and the β axis to adjust a position of the metallic member 300, thereby enabling a side of the end edge 305 to be moved to face the cutter 171. The first sliding module 13 and the second sliding module 14 drive the cutter 171 to move to chamfer the end edge 305 in similar procedure, until the chamfering of the end edge 305 of the metallic member 300 is finished.

The machine control system 100 may first mill the peripheral sidewall 303 and the end edge 305, then the top portion 301 is machined by the lathe tool 151. The worktable 12 has multi-axis rotation under the control of the rotating control unit 25. The cutting feeding module 14 moves along a determined path to match the multi-axis rotation of the worktable 12 to mill the metallic member 300.

Changing a relation between the frequency f and the moving range H, the machine control system 100 machines the top portion 301 into different shapes with the lathe tool 151.

When machining the top portion 301, the original machine point of the metallic member 300 may be located at a middle of an edge of the top position 301 parallel to the Y axis. The terminal machine point of the metallic member 300 is located at a central of the top portion 301 of the metallic member 300, such that the lathe tool 151 moves along the X axis toward the central of the top portion 301. In other embodiment, the original machine point may be located at the central of the top portion 301, and the terminal machine point may be located at the edge of the top portion 301.

The machine control system 100 machines the top portion 301, the peripheral sidewall 303, and the end edge 305 at the same time and obtains a high surface finish. When the first sliding module 13 moves the lathe feeding module 15 along the X axis or the second sliding module 14 moves the lathe feeding module 15 along the Y axis, simultaneously, the lathe feeding module 15 drives the lathe tool 151 to move along the Z axis reciprocally at a high speed, thus the lathe tool 171 machine the top portion 301 continuously in a spiral track, thereby obtaining a high surface finish on the top portion 301. The cutting feeding module 17 drives the cutter 171 along the predetermined path to mill the peripheral sidewall 303 of the metallic member 300. Then the rotation control unit 25 controls the worktable 12 to rotate, thereby matching the cutting feeding module 17 to chamfer the end edge 305.

In another embodiment, the cutting feeding mechanism 17 can be a scraping feeding module, and the cutter 171 can be a scraping cutter corresponding the scraping feeding module. Parameters of scraping are input into the input module 10. Process of the cutting feeding mechanism 17 and the cutter 171 scraping the workpiece 300 is described in detail. In the scraping process, the cutter 171 scrapes the peripheral sidewall 303. First, the linear control unit 173 controls the cutter 171 to move along the Z axis until the cutter 171 arrives at a predetermined position of the peripheral sidewall 303. Then, the first sliding module 13 and the second sliding module 14 drives the cutter 171 to scrap the metallic member 300 along the X axis and the Y axis at a speed v2, according a predetermined path, the cutting feeding module 17 simultaneously controls a feed of the cutter 171 relative to the metallic member 300. When the cutter 171 arrives at the corner 3033, the position control unit 21 controls the first sliding module 13 and the second sliding module 14 to adjust a forward direction of the cutting feeding module 17, and the rotation unit 175 simultaneously controls the cutting feeding module 17 to drive the cutter 171 to rotate along the γ axis at a rotation speed r2, thereby enabling the cutter 171 to scrap the corner 3033 along a tangent direction of the corner 3033. When the cutter 171 arrives at side surface 3031 next to the scrapped side surface 3031, the rotation unit 175 controls the cutting feeding module 17 to stop rotating, and scrap the next side surface 3031 linearly at a moving speed V2. The cutter 171 scrapes the four side surface 3031 one by one, thereby accomplishing the scraping of the peripheral sidewall 303. In the embodiment, the worktable 90 remains still. The rotation control unit 25 may transmit signal the worktable 12 to rotate along the α axis to match the cutter 171 scraping the peripheral sidewall 303.

When the cutter 171 scrapes the peripheral sidewall 303 for t2 minutes, the position control unit 21 transmits a signal to the first sliding module 13 and the second sliding module 14. So, the first sliding module 13 and the second sliding module 14 drive the cutting feeding module 17 away from the metallic member 300. In addition, the cutting feeding module 17 holds to stop rotating and scraping. The rotation control unit 25 controls the worktable 12 to rotate along the α axis to turn the end edge 305 toward the cutter 171. Then, the first sliding module 13 and the second sliding module 14 drive the cutting feeding module 17 toward the end edge 305 till the cutter 171 resists a preset portion on the end edge 305. The first sliding module 13 and the second sliding module 14 drive the cutter 171 to move along a predetermined path at speed V3, s the cutting feeding module 17 simultaneously controls a chamfering feed of the cutter 171 relative to the metallic member 300. When the cutter 171 arrives at the corner 3031, the position control unit 21 controls the first sliding module 13 and the second sliding module 14 to adjust a forward direction of the cutting feeding module 17, and simultaneously the rotation unit 175 controls the cutting feeding module 17 to drive the cutter 171 to rotate along the γ axis at a rotation speed r2, thereby enabling the cutter 171 to scrap the end edge 305 on the corner 3033 along a tangent direction. When the cutter 171 arrives at the end edge 305 on a side surface 3031 next to the scrapped end edge 305, the rotation unit 175 stops the cutting feeding module 17 from rotating. The rotation control unit 25 transmits controlling signal to the worktable 12 and rotates the worktable 12 along the α axis and the β axis to adjust a position of the metallic member 300, thereby enabling a side of the end edge 305 next to the side had been scraped to face the cutter 171. The first sliding module 13 and the second sliding module 14 drive the cutter 171 to move to chamfer the end edge 305 in similar procedure, until finishing chamfering the end edge 305 of the metallic member 300.

While the present disclosure has been described with reference to particular embodiments, the description is illustrative of the disclosure and is not to be construed as limiting the disclosure. Therefore, various modifications can be made to the embodiments by those of ordinary skill in the art without departing from the scope of the disclosure, as defined by the appended claims.

## Claims

1. A machine control system employing a lathe tool and a cutter, comprising:
an input module (10);
a worktable (12);
a first sliding module (13);
a second sliding module (14);
a lathe feeding module (15);
a lathe tool (151) connected to the lathe feeding module (15);
a cutting feeding module (17);
a cutter (171) connected to the cutting feeding module (17), and
a control module (20) electrically connected to the input module (10), the worktable (12), the first sliding module (13), the second sliding module (14), the lathe feeding module (15), and the cutting feeding module (17), wherein the first sliding module (13) is controlled by the input module (10) inputting control parameters, the first sliding module (13) drives the second sliding module (14) to slide along a first direction, the control module (20) controls the second sliding module (14), the second sliding module (14) drives the lathe feeding module (15) and the cutting feeding module (17) to slide along a second direction perpendicular to the first direction, the lathe feeding module (15) controls the lathe tool (151) to slide along a third direction perpendicular to the first direction and the second direction reciprocally at a high speed, and the worktable (12) drives a metallic member (300) to rotate, a distance of a reciprocating movement of the lathe tool (151) in the third direction varies with a movement of the lathe tool (151) in the first direction, thereby machining a top portion (301) with a three dimensional curved surface of the metallic member (300), the cutting feeding module (17) controls the cutter (171) to slide along the third direction and rotate along a first axis parallel to the third direction, and the worktable (12) is configured to rotate around a second axis parallel to the third direction; and
wherein the control module (20) further comprises a rotating controlling unit (25) electrically connected to the worktable to control the worktable to rotate.

2. The machine control system of claim 1, wherein the cutting feeding module (17) comprises a linear control unit (173) and a rotation unit (175), the linear control unit (173) controls the cutter (171) to move along the third direction, and the rotation unit (175) controls the cutter (171) to rotate along the first axis.

3. The machine control system of claim 1 or 2, wherein the control module (20) comprises a position control unit (21) and a switching unit (23), the position control unit is electrically connected to the first sliding module (13) and the second sliding module (14), the position control unit controls the first sliding module and the second sliding module to move the lathe feeding module, and the cutting feeding module along the first direction and the second direction, the switching unit is electrically connected to the lathe feeding module and the cutting feeding module, and the switching unit switches executions between the lathe feeding module and the cutting feeding module.

4. The machine control system of any of claims 1 to 3 , wherein the control parameters comprises moving ranges, moving speeds of the lathe feeding module and the cutting feeding module along the first direction and the second direction, frequency and moving ranges of the lathe tool along the third direction, rotating speed of the cutter along the first axis, and a rotating speed of the worktable.

## Patentansprüche

1. Maschinensteuersystem, das ein Drehmaschinenwerkzeug und ein Schneidwerkzeug nutzt, umfassend:
ein Eingabemodul (10);
einen Arbeitstisch (12);
ein erstes Gleitmodul (13);
ein zweites Gleitmodul (14);
ein Drehmaschinenzufuhrmodul (15);
ein Drehmaschinenwerkzeug (151), das mit dem Drehmaschinenzufuhrmodul (15) verbunden ist;
ein Schneidwerkzeugzufuhrmodul (17);
ein Schneidwerkzeug (171), das mit dem Schneidwerkzeugzufuhrmodul (17) verbunden ist, und
ein Steuermodul (20), das mit dem Eingabemodul (10), dem Arbeitstisch (12), dem ersten Gleitmodul (13), dem zweiten Gleitmodul (14), dem Drehmaschinenzufuhrmodul (15) und dem Schneidwerkzeugzufuhrmodul (17) elektrisch verbunden ist, wobei das erste Gleitmodul (13) durch das Eingabemodul (10) gesteuert wird, das Steuerparameter eingibt, das erste Gleitmodul (13) das zweite Gleitmodul (14) antreibt, um entlang einer ersten Richtung zu gleiten, das Steuermodul (20) das zweite Gleitmodul (14) steuert, das zweite Gleitmodul (14) das Drehmaschinenzufuhrmodul (15) und das Schneidwerkzeugzufuhrmodul (17) antreibt, um entlang einer zweiten Richtung senkrecht zu der ersten Richtung zu gleiten, das Drehmaschinenzufuhrmodul (15) das Drehmaschinenwerkzeug (151) steuert, um entlang einer dritten Richtung senkrecht zu der ersten Richtung und der zweiten Richtung mit einer hoher Geschwindigkeit hin- und hergehend zu gleiten, und der Arbeitstisch (12) ein metallisches Element (300) antreibt, um sich zu drehen, ein Abstand einer Hin- und Herbewegung des Drehmaschinenwerkzeugs (151) in der dritten Richtung mit einer Bewegung des Drehmaschinenwerkzeugs (151) in der ersten Richtung variiert, wobei dadurch ein oberer Abschnitt (301) mit einer dreidimensional gekrümmten Oberfläche des metallischen Elements (300) bearbeitet wird, das Schneidwerkzeugzufuhrmodul (17) das Schneidwerkzeug (171) steuert, um entlang der dritten Richtung zu gleiten und sich entlang einer ersten Achse parallel zu der dritten Richtung zu drehen, und der Arbeitstisch (12) konfiguriert ist, um sich um eine zweite Achse herum parallel zu der dritten Richtung zu drehen; und
wobei das Steuermodul (20) ferner eine sich drehende Steuereinheit (25) umfasst, die mit dem Arbeitstisch elektrisch verbunden ist, um den Arbeitstisch zum Drehen zu steuern.

2. Maschinensteuersystem nach Anspruch 1, wobei das Schneidwerkzeugzufuhrmodul (17) eine lineare Steuereinheit (173) und eine Dreheinheit (175) umfasst, wobei die lineare Steuereinheit (173) das Schneidwerkzeug (171) steuert, um sich entlang der dritten Richtung zu bewegen, und die Dreheinheit (175) das Schneidwerkzeug (171) steuert, um sich entlang der ersten Achse zu drehen.

3. Maschinensteuersystem nach Anspruch 1 oder 2, wobei das Steuermodul (20) eine Positionssteuereinheit (21) und eine Schalteinheit (23) umfasst, wobei die Positionssteuereinheit mit dem ersten Gleitmodul (13) und dem zweiten Gleitmodul (14) elektrisch verbunden ist, die Positionssteuereinheit das erste Gleitmodul und das zweite Gleitmodul steuert, um das Drehmaschinenzufuhrmodul und das Schneidwerkzeugzufuhrmodul entlang der ersten Richtung und der zweiten Richtung zu bewegen, die Schalteinheit mit dem Drehmaschinenzufuhrmodul und dem Schneidwerkzeugzufuhrmodul elektrisch verbunden ist, und die Schalteinheit Ausführungen zwischen dem Drehmaschinenzufuhrmodul und dem Schneidwerkzeugzufuhrmodul umschaltet.

4. Maschinensteuersystem nach einem der Ansprüche 1 bis 3, wobei die Steuerparameter Bewegungsbereiche, Bewegungsgeschwindigkeiten des Drehmaschinenzufuhrmoduls und des Schneidwerkzeugzufuhrmoduls entlang der ersten Richtung und der zweiten Richtung, eine Frequenz und Bewegungsbereiche des Drehmaschinenwerkzeugs entlang der dritten Richtung, Drehgeschwindigkeit des Schneidwerkzeugs entlang der ersten Achse und eine Drehgeschwindigkeit des Arbeitstisches umfassen.

## Revendications

1. Système de commande de machine employant un outil de tour et un dispositif de coupe, comprenant :
un module d'entrée (10) ;
une table de travail (12) ;
un premier module coulissant (13) ;
un second module coulissant (14) ;
un module d'alimentation de tour (15) ;
un outil de tour (151) relié au module d'alimentation de tour (15) ;
un module d'alimentation de coupe (17) ;
un dispositif de coupe (171) relié au module d'alimentation de coupe (17), et
un module de commande (20) connecté électriquement au module d'entrée (10), à la table de travail (12), au premier module coulissant (13), au second module coulissant (14), au module d'alimentation de tour (15) et au module d'alimentation de coupe (17), dans lequel le premier module coulissant (13) est commandé par le module d'entrée (10) entrant des paramètres de commande, le premier module coulissant (13) entraîne le second module coulissant (14) pour qu'il glisse le long d'une première direction, le module de commande (20) commande le second module coulissant (14), le second module coulissant (14) entraîne le module d'alimentation de tour (15) et le module d'alimentation de coupe (17) pour qu'ils coulissent le long d'une deuxième direction perpendiculaire à la première direction, le module d'alimentation de tour (15) commande l'outil de tour (151) pour qu'il glisse le long d'une troisième direction perpendiculaire à la première direction et à la deuxième direction réciproquement à une vitesse élevée, et la table de travail (12) entraîne un élément métallique (300) pour qu'il tourne, une distance d'un mouvement alternatif de l'outil de tour (151) dans la troisième direction varie avec un mouvement de l'outil de tour (151) dans la première direction, usinant ainsi une partie supérieure (301) avec une surface incurvée tridimensionnelle de l'élément métallique (300), le module d'alimentation de coupe (17) commande le dispositif de coupe (171) pour le faire coulisser le long de la troisième direction et tourner le long d'un premier axe parallèle à la troisième direction, et la table de travail (12) est conçue pour tourner autour d'un second axe parallèle à la troisième direction ; et
dans lequel le module de commande (20) comprend en outre une unité de commande rotative (25) connectée électriquement à la table de travail pour commander la rotation de la table de travail.

2. Système de commande de machine selon la revendication 1, dans lequel le module d'alimentation de coupe (17) comprend une unité de commande linéaire (173) et une unité de rotation (175), l'unité de commande linéaire (173) commande le déplacement du dispositif de coupe (171) le long de la troisième direction, et l'unité de rotation (175) commande le dispositif de coupe (171) pour qu'il tourne le long du premier axe.

3. Système de commande de machine selon la revendication 1 ou 2, dans lequel le module de commande (20) comprend une unité de commande de position (21) et une unité de commutation (23), l'unité de commande de position étant connectée électriquement au premier module coulissant (13) et au second module coulissant (14), l'unité de commande de position commande le premier module coulissant et le second module coulissant pour déplacer le module d'alimentation de tour, et le module d'alimentation de coupe le long de la première direction et de la deuxième direction, l'unité de commutation est connectée électriquement au module d'alimentation de tour et au module d'alimentation de coupe, et l'unité de commutation commute les exécutions entre le module d'alimentation de tour et le module d'alimentation de coupe.

4. Système de commande de machine selon l'une quelconque des revendications 1 à 3, dans lequel les paramètres de commande comprennent des plages de déplacement, des vitesses de déplacement du module d'alimentation de tour et du module d'alimentation de coupe le long de la première direction et de la deuxième direction, la fréquence et les plages de déplacement de l'outil de tour le long de la troisième direction, la vitesse de rotation du dispositif de coupe le long du premier axe et une vitesse de rotation de la table de travail.
